# EUROPEAN PATENT APPLICATION

(11) **EP 2 623 777 A1**
(43) Date of publication of application: **07.08.2013**
(21) Application number: 12747763.6
(22) Date of filing: 09.02.2012
(51) Int. Cl.: F03D 11/00, F03D 1/06

(54) **WIND POWER GENERATION APPARATUS**

(30) Priority: 15.02.2011 JP 2011029951
(71) Applicant: Mitsubishi Heavy Industries, Ltd., Tokyo 108-8215 (JP)
(72) Inventor: MATSUO, Takeshi, Tokyo 108-8215 (JP); OKANO, Yasushi, Tokyo 108-8215 (JP); NAKAMURA, Taisuke, Tokyo 108-8215 (JP); GOTOU, Chuuhachi, Tokyo 108-8215 (JP); HIRAI, Shigeto, Tokyo 108-8215 (JP); SATO, Shinsuke, Tokyo 108-8215 (JP)
(74) Representative: Intès, Didier Gérard André
(86) International application number: PCT/JP2012/053018
(87) International publication number: WO 2012/111532

(57) **Abstract**

The present invention extends the operating lives of electronic equipment and a pitch cylinder installed within a rotor head, and improves the reliability and durability of an entire wind turbine generator. In a wind turbine generator (1) in which a rotor head (4) rotating upon receiving wind power on wind turbine blades (5) drives a generator installed within a nacelle (3) provided with an intake port (31) to generate electric power, the nacelle (3) being installed on an upper end portion of a tower erected on a foundation, a head cover (42) covering a rotor head body (41) of the rotor head (4), and a hub control board (20) being installed within the rotor head body (41), the rotor head (4) and the nacelle (3) communicate with each other to allow air passage therethrough, and an intake port and an exhaust port arranged apart from each other in the direction of a rotary axis (CL) are provided in the rotor head body (41), so as to allow air supplied from the intake port to form an in-head air flow (Ar) that passes through an area around the hub control board (20) arranged within the rotor head body (41) and flows out from the exhaust port without forming a circulation flow.

## Description

### Technical Field

The present invention relates to a wind turbine generator where equipment such as a control board is installed within a rotor head, and more particularly, to a wind turbine generator which ventilates and cools an inner portion of the rotor head.

### {Background Art}

A wind turbine generator (also referred to as "wind turbine" below) is a system in which a rotor head including wind turbine blades rotates upon receiving wind power, and thereby drives a generator via a power train to generate electric power.
The aforementioned rotor head is attached to an end portion of a nacelle that is pivotably installed on a wind turbine tower (referred to as "tower" below). The rotor head is supported so as to be rotatable about a substantially horizontal lateral rotary axis.

Normally, a pitch cylinder, a pitch motor, and an accumulator constituting a pitch control system for the wind turbine blades are installed within the rotor head of the wind turbine generator. A hub control board including a communication device for communication with a programmable logic controller (PLC) and the nacelle side is further installed therein as a control unit that controls operation of the control system.
The rotor head includes a rotor head body generally made of cast iron, and a head cover made of resin that covers the outer periphery of the rotor head body. Also, it is necessary to allow operators to go into and out of an inner portion of the rotor head body so as to perform a maintenance operation or the like. Therefore, manholes are provided in the rotor head body at two to three positions or more on a nacelle side, and at least one position on a tip end side.
In the following description, an inner portion of the rotor head specifically means the inner portion of the rotor head body.

The pitch motor is a main heat source out of the aforementioned equipment in the rotor head, that is, the equipment installed within the rotor head body (referred to as "in-head equipment" below).
Air inside the rotor head may have a high temperature exceeding an upper-limit temperature of the control board particularly during daytime in summer due to heat generated by the pitch motor, thereby reducing an operating life of the electronic equipment constituting the control board. The upper-limit temperature inside a typical control board is 50 to 60°C, and the temperature inside the control board is preferably maintained equal to or lower than the upper-limit temperature.

Also, a sliding portion of the pitch cylinder is subjected to fine surface finishing so as to reduce friction generated while the cylinder is operating. Thus, when extension of an operating life of the pitch cylinder is to be preferentially achieved, the inner portion of the rotor head body preferably has a sealed structure. However, when the inner portion of the rotor head has a sealed structure, the air inside the rotor head is not vented, so that exhaust heat of the in-head equipment is accumulated to increase the air temperature inside the rotor head. Thus, the air temperature inside the rotor head body is increased, and the temperature inside the hub control board installed within a high-temperature atmosphere is also increased, so that the operating life of the electronic equipment installed within the hub control board is reduced.

On the contrary, when cooling of the electronic equipment installed within the control board is to be preferentially achieved, the cooling is effectively performed by directly supplying outside air into the rotor head body, and thereby venting and cooling the air inside the rotor head body. However, particularly in a case in which the wind turbine generator is installed at a place where outside air contains salt such as a coastal region, rust easily occurs on the sliding portion surface of the pitch cylinder. It is thus necessary to remove salt and dust through a filter from intake air into the rotor head before supply so as to prevent rust.

As described above, with regards to the inner portion of the rotor head of the wind turbine generator, it is in a contradictory relationship to employ an open system for the rotor head, and thereby ventilate and cool the inner portion of the rotor head so as to preferentially achieve the extension of the operating life of the electronic equipment by cooling the electronic equipment, and to employ a closed system for the rotor head to provide the sealed structure in the inner portion of the rotor head so as to preferentially achieve the extension of the operating life of the pitch cylinder by preventing rust thereon.
To solve the aforementioned contradictory relationship, PTL 1 below discloses a configuration example in which an intake port and an exhaust port are provided in one leading edge manhole provided in a rotor head body. It is also disclosed that outside air is guided into a rotor head through a flexible piping so as to effectively cool equipment inside the rotor head. That is, PTL 1 discloses that the intake and exhaust ports are provided in the manhole of the rotor head, and the outside air is sucked to vent and cool air inside the rotor head.

### Citation List

### Patent Literature

{PTL 1}
US Patent Application Publication No. 2009/0060748

### {Summary of Invention}

### Technical Problem

In PTL 1 described above, a method that the outside air and an inner portion of the rotor head are connected together via the flexible piping (see Fig. 2 in PTL 1) uses only a dynamic pressure of an outside air flow as a fluid force for supplying the outside air into the rotor head. Thus, the fluid force is up to about 100 to 200 Pa.
Thus, there is a problem that the outside air is supplied into the rotor head at a very small flow rate, and a sufficient amount of outside air cannot be ensured. Even if the outside air can be supplied into the rotor head, a circulation flow is generated close to the manhole at a tip end of the rotor head. It is thus difficult for the outside air having a low temperature to reach a backmost position of the rotor head. Therefore, there is also a problem that a sufficient cooling effect is difficult to obtain for the in-head equipment (a pitch motor and a control board) as a target to be cooled installed within the rotor head on a nacelle side.

The outside air and the inner portion of the rotor head are also connected together through a flexible piping having an elbow (see Fig. 4 in PTL 1). Although water is to be removed from the outside air by the elbow in the above method, a water-preventing effect thereof is not clarified. The outside air in this case is sucked into the rotor head by suction using a pitch motor fan. However, since a filter with fineness of 1 µm, which has a high pressure drop, is recommended for dust removal and salt removal, an amount of intake air into the rotor head is restricted.

Fig. 5 in PTL 1 discloses a configuration example in which the air inside the rotor head is discharged by a fan installed at a leading edge hatch of the rotor head, and the outside air is sucked to the pitch motor inside the rotor head through the flexible piping. In the configuration example, a circulation flow is formed between the pitch motor and the fan. Therefore, there is a problem that an air circulation force around the control board as the target to be cooled is very small, and an inner portion of the control board cannot be sufficiently cooled down.
Also, Fig. 6 in PTL 1 discloses a configuration example in which the outside air is sucked by a fan added to the leading edge hatch of the rotor head, and the air inside the rotor head is discharged from an opening provided in an outer peripheral portion of the fan added to the leading edge hatch. In the configuration example, a circulation flow is only formed in the vicinity of the fan. Therefore, there is a problem that the air circulation force around the control board is very small, and the inner portion of the control board cannot be sufficiently cooled down.

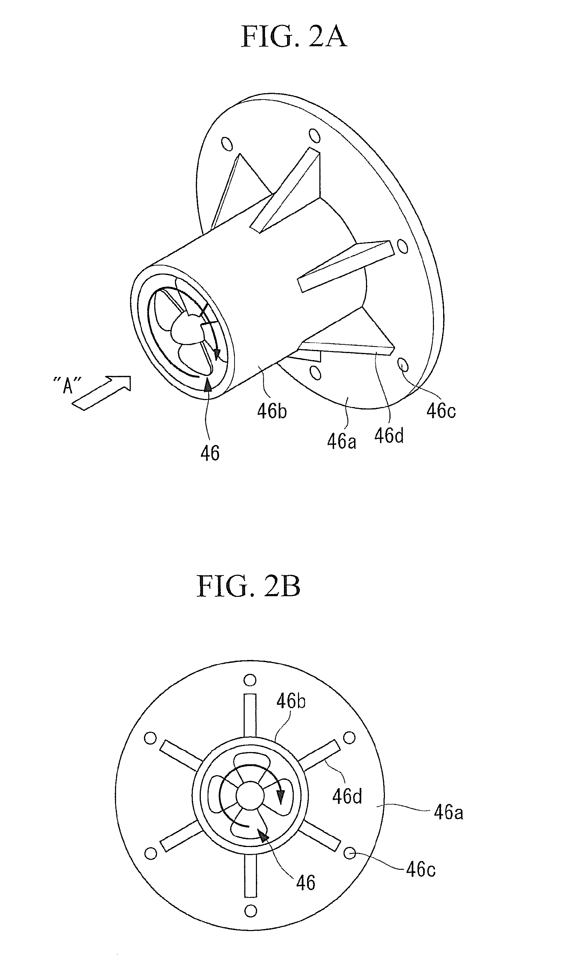

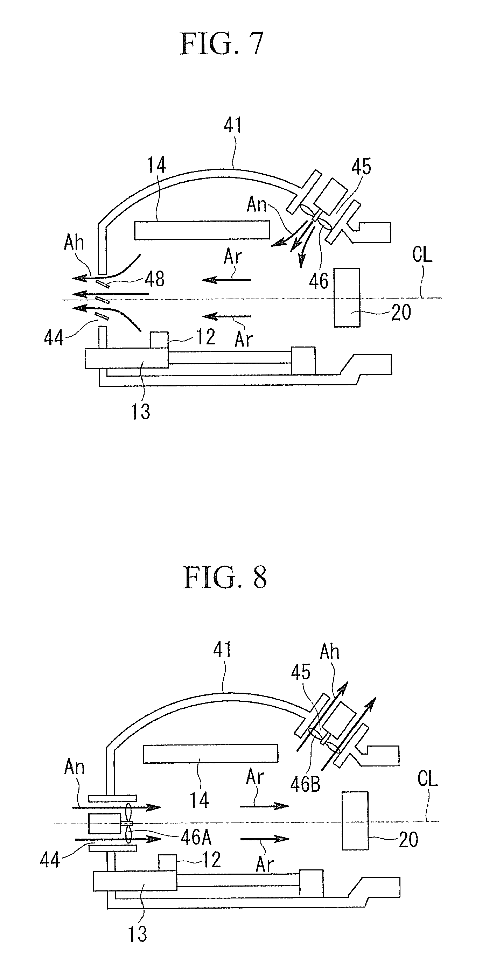

Furthermore, Fig. 7 in PTL 1 discloses a configuration example in which the outside air is sucked into the rotor head through an NACA duct in a similar manner to Fig. 2 described above. In the configuration example, only the dynamic pressure of the outside air flow is used as the fluid force into the rotor head. Thus, there is a problem that the outside air is supplied into the rotor head at a very small flow rate.

To solve the above problems, it is an object of the present invention to extend an operating life of electronic equipment in a rotor head by employing an open system for the rotor head and thereby ventilating and cooling an inner portion of the rotor head, and also extend an operating life of a pitch cylinder by removing dust and salt from air supplied into the rotor head and thereby preventing rust on the pitch cylinder even when the rotor head has an open system.

### Solution to Problem

To solve the above problems, the present invention employs the following solutions.
A wind turbine generator according to the present invention is a wind turbine generator in which a rotor head rotating upon receiving wind power on a wind turbine blade drives a generator installed within a nacelle provided with an intake port for introducing outside air to generate electric power, the nacelle being installed on an upper end portion of a tower erected on a foundation, a head cover covering an outer periphery of a rotor head body of the rotor head, and equipment such as a control board being installed within the rotor head body, wherein the rotor head and the nacelle communicate with each other to allow air passage therethrough, and an intake port and an exhaust port arranged apart from each other in a rotary axis direction are provided in the rotor head body, so as to allow air supplied from the intake port to form an in-head air flow that passes through an area around the equipment and flows out from the exhaust port.

In accordance with the wind turbine generator as described above, the rotor head and the nacelle communicate with each other to allow air passage therethrough, the intake port and the exhaust port arranged apart from each other in the rotary axis direction are provided in the rotor head body, and the air supplied from the intake port of the rotor head forms the in-head air flow that passes through the area around the equipment arranged within the rotor head body and flows out from the exhaust port. Accordingly, the air supplied into the rotor head body from the intake port flows out from the exhaust port without forming a circulation flow inside the rotor head body. At this point, since the in-head air flow flows through the area around the equipment arranged within the rotor head body, the area around the equipment can be actively ventilated and cooled down.

In the invention described above, a pressure drop element may be attached to the intake port.
In the above invention, the intake port and the exhaust port may be provided in at least one leading edge manhole and at least one nacelle-side manhole provided in the rotor head body. Accordingly, manholes that have been conventionally provided so as to be freely opened and closed for maintenance can be effectively used as the intake port and the exhaust port. That is, it is not necessary to provide a new opening portion in the rotor head body so as to form the aforementioned in-head air flow.

In the above invention, an intake and/or exhaust fan may be installed at at least one of the intake port and the exhaust port. Accordingly, the in-head air flow can be reliably formed. An axial flow fan is preferably used as the above fan so as to maintain a wind pressure until wind reaches the in-head equipment. Also, when the fan is attached to a cover of the manhole, it is only necessary to remove the cover of the manhole. A maintenance operation or a renovation operation of existing facilities can be easily performed.
In this case, air inside the nacelle may be used as the air supplied from the intake port by operation of the fan. Accordingly, clean and cool air can be obtained by a dust removal and salt removal filter installed at the intake port of the nacelle, so that no filter is required at the rotor head body.

In the above invention, a main stream of the in-head air flow may have a speed component in a direction along a rotary shaft center of the rotor head. Accordingly, the air inside the rotor head can be actively vented to reduce an internal temperature.

### Advantageous Effects of Invention

In accordance with the present invention described above, the in-head air flow supplied into the rotor head body from the intake port and flowing out from the exhaust port is formed. Thus, the in-head air flow hardly generates a circulation flow inside the rotor head body, and the equipment inside the rotor head body can be effectively cooled down.
As a result, the equipment installed within the rotor head body is maintained at a temperature equal to or lower than an upper-limit temperature, and thereby has a longer operating life. Also, since the air inside the nacelle is employed as the air supplied from the intake port, clean and cool air can be obtained even when a filter is not provided at the intake port of the rotor head body. Therefore, an operating life of a pitch cylinder can be extended, so that such a remarkable effect as to extend the operating lives of the electronic equipment and the pitch cylinder installed within the rotor head and improve the reliability and durability of the entire wind turbine generator can be obtained.

### Brief Description of Drawings

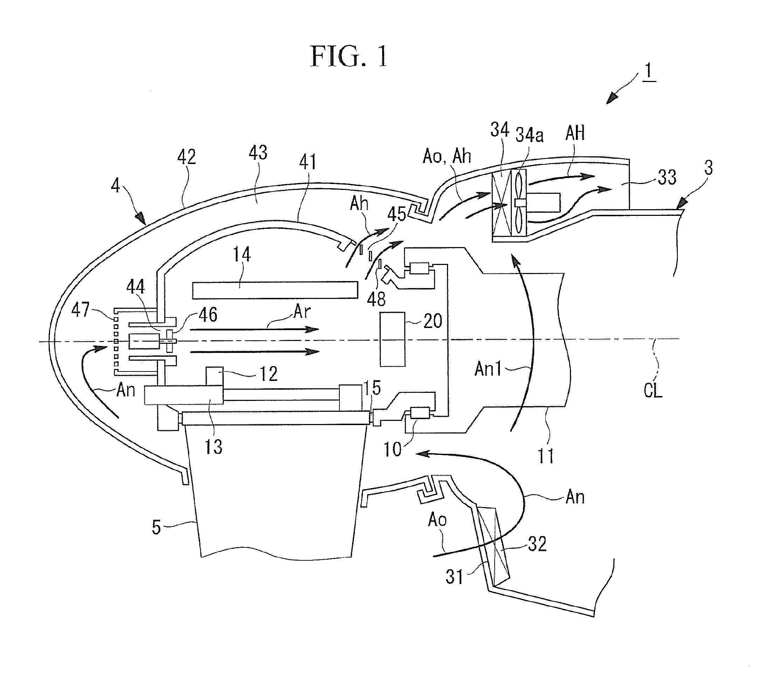

{Fig. 1}
   Fig. 1 is a sectional view illustrating an internal structure around a rotor head as one embodiment of a wind turbine generator according to the present invention.
{Fig. 2A}
   Fig. 2A is a perspective view illustrating a configuration example of a case in which a fan is attached to a cover of a manhole.
{Fig. 2B}
   Fig. 2B is a view on an arrow A in Fig. 2A illustrating the configuration example of the case in which the fan is attached to the cover of the manhole.
{Fig. 3A}
   Fig. 3A is a front view illustrating a configuration example of a louver installed at an intake port of the manhole.
{Fig. 3B}
   Fig. 3B is a sectional view taken along B-B in Fig. 3A illustrating the configuration example of the louver installed at the intake port of the manhole.
{Fig. 4}
   Fig. 4 is a sectional view illustrating a configuration example in which a filter is added to the louver shown in Figs. 3.
{Fig. 5}
   Fig. 5 is a sectional view illustrating a configuration example of a labyrinth installed at the intake port of the manhole.
{Fig. 6}
   Fig. 6 is a side view schematically illustrating a wind turbine generator.
{Fig. 7}
   Fig. 7 is a sectional view illustrating an internal structure of a rotor head body as a first modification of the wind turbine generator shown in Fig. 1.
{Fig. 8}
   Fig. 8 is a sectional view illustrating an internal structure of a rotor head body as a second modification of the wind turbine generator shown in Fig. 1.

### {Description of Embodiments}

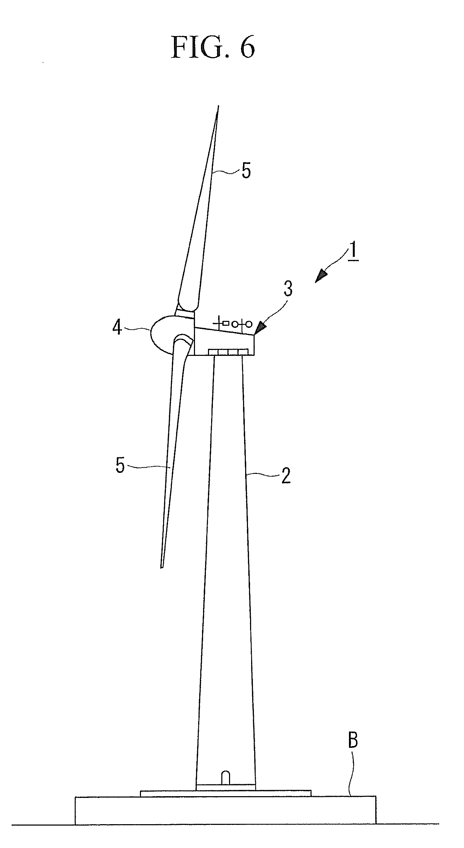

In the following, one embodiment of a wind turbine generator according to the present invention will be described based on the drawings.
As shown in Fig. 6, a wind turbine generator 1 includes a wind turbine tower (referred to as "tower" below) 2 erected on a foundation B, a nacelle 3 installed on an upper end of the tower 2, and a rotor head 4 provided on a front end side of the nacelle 3 so as to be supported rotatably about a substantially horizontal lateral rotary axis.

A plurality of (e.g., three) wind turbine blades 5 are attached to the rotor head 4 around the rotary axis. A force of wind hitting the wind turbine blades 5 from the direction of the rotary axis of the rotor head 4 is thereby converted to power for rotating the rotor head 4 about the rotary axis.
An anemometer that measures a wind speed value around the nacelle 3, an anemoscope that measures a wind direction, or the like are installed at appropriate positions on an outer peripheral surface (e.g., an upper portion) of the nacelle 3.

That is, in the wind turbine generator 1, the rotor head 4 rotating about the substantially horizontal rotary axis upon receiving wind power on the wind turbine blades 5 drives a generator (not shown) installed within the nacelle 3 to generate electric power, and the nacelle 3 is pivotably installed on the upper end portion of the tower 2 erected on the foundation B.

The aforementioned rotor head 4 includes a rotor head body 41, and a head cover 42 as shown in, for example, Fig. 1. The rotor head body 41 is normally a cast component, and the head cover 42 covers the outer periphery of the rotor head body 41 so as to form a space portion 43 around the rotor head body 41.
Electrical equipment such as a control board composed of a plurality of electrical components, e.g., a hub control board 20 as an electrical box that accommodates a pitch control system (a PLC, a communication device or the like) to control the wind turbine blades 5, and in-head equipment such as a driver component having a sliding portion, e.g., a main bearing 10, are installed within the rotor head 4.
In the drawing, reference numeral 11 denotes a gear box, and reference numerals 12 to 15 denote constituent members of the pitch control system: 12 a pitch motor, 13 a pitch cylinder, 14 an accumulator, and 15 a blade slewing ring bearing that rotatably supports the wind turbine blades 5.

A leading edge manhole 44 that opens in a tip end portion, and a nacelle-side manhole 45 that opens in the vicinity of the main bearing 10 are also provided in the rotor head body 41. The leading edge manhole 44 and the nacelle-side manhole 45 are required in construction or maintenance of the wind turbine generator 1, and used to allow operators to go into and out of the rotor head body 41, and allow the equipment installed therein to be carried into and out of the rotor head body 41. In a configuration example shown in the drawings, an opening of the leading edge manhole 44 is employed as an intake port, and an opening of the nacelle-side manhole 45 is employed as an exhaust port.
In the present embodiment, a ventilation fan 46 is attached by using a flange portion for a cover of the leading edge manhole 44 as the intake port. The ventilation fan 46 is an electric intake fan for sucking air from outside of the rotor head body 41. A fan cover 47 is attached to outside of the rotor head body 41.

In the ventilation fan 46, a fan casing 46b is fixed to and thereby integrated with a manhole cover 46a as shown in, for example, Fig. 2A. The ventilation fan 46 is fixedly installed at the flange portion for a cover of the leading edge manhole 44 with bolts and nuts by using bolt holes 46c in the manhole cover 46a. In the drawing, reference numeral 46d denotes a rib, which reinforces the fixation of the fan casing 46b to the manhole cover 46a.
Since the ventilation fan 46 is attached by using the manhole cover 46a as described above, it is only necessary to attach and remove the manhole cover 46a. Thus, a maintenance operation or a renovation operation of existing facilities can be easily performed.

Since the intake port and the exhaust port described above are provided by using at least one leading edge manhole 44 and at least one nacelle-side manhole 45 provided in the rotor head body 41, the intake port and the exhaust port can be provided by effectively using manholes that normally exist for maintenance. That is, it is not necessary to newly provide an opening portion in the rotor head body 41 so as to form the below-mentioned in-head air flow Ar.

As described above, the intake port (the leading edge manhole 44) and the exhaust port (the nacelle-side manhole 45) are provided in the aforementioned rotor head body 41 so as to be arranged apart from each other in the direction of a rotary axis CL about which the rotor head 4 rotates. When the ventilation fan 46 is operated, air supplied from the intake port forms the in-head air flow (see an arrow Ar in the drawing) that flows in the direction of the rotary axis inside the rotor head body 41.
The hub control board 20 that generates heat during operation is installed within the rotor head body 41 at a position on the nacelle 3 side and on the rotary axis CL, or at a position on the nacelle 3 side and adjacent to the rotary axis CL. Therefore, the aforementioned in-head air flow Ar flows in from the leading edge manhole 44, passes through an area around the hub control board 20, and flows out from the exhaust port of the nacelle-side manhole 45.

Meanwhile, in the configuration example shown in the drawings, a nacelle intake port 31 is provided in a lower portion of a front surface of the nacelle 3. The nacelle intake port 31 is an opening portion for supplying low-temperature outside air Ao into the nacelle 3. A pressure drop element 32 composed of a louver, a dust removal filter, a salt removal filter or the like is attached to the nacelle intake port 31 so as to remove dust and/or salt from the outside air Ao supplied into the nacelle 3.

The outside air Ao supplied from the nacelle intake port 31 is circulated within the nacelle 3 through an unillustrated in-nacelle path. As a result, the low-temperature outside air Ao is used to ventilate an inner portion of the nacelle 3, and cool equipment installed within the nacelle 3, an oil cooler 34, or the like.
The outside air Ao, the temperature of which is increased as described above, is discharged to outside of the nacelle from a nacelle exhaust port 33 provided in an upper portion of the nacelle 3 as indicated by an arrow AH in the drawing.
Also, reference numeral 34 in the drawing denotes the oil cooler for cooling lubricant oil used in the main bearing 10 or the like. The outside air Ao is supplied (sucked) into the nacelle 3 from the nacelle intake port 31 by operating an oil cooler fan 34a. The outside air Ao in this case is discharged to outside of the nacelle after finally cooling the lubricant oil flowing through the oil cooler 34.

Meanwhile, air supplied into the rotor head body 41 by operating the ventilation fan 46 as described above is a portion of the outside air Ao supplied into the nacelle 3 from the nacelle intake port 31. In the following description, the air is referred to as in-nacelle air, which is indicated by an arrow An in the drawing.
The in-nacelle air An passes through the space portion 43 of the rotor head 4 to be supplied into the rotor head body 41 from the intake port of the leading edge manhole 44, and flows as the aforementioned in-head air flow Ar. Air having substantially the same temperature as the outside air Ao, not in-nacelle air An1 flowing toward the main bearing, is supplied into the rotor head body 41.

The in-head air flow Ar is increased in temperature to become high-temperature exhaust air Ah by ventilating and cooling an inner portion of the rotor head body 41, and flows out of the rotor head body 41 from the nacelle-side manhole 45 as the exhaust port as indicated by an arrow in the drawing. The high-temperature exhaust air Ah joins the in-nacelle air flow An1 that is increased in temperature by ventilating and cooling the inner portion of the nacelle 3, and passes through the oil cooler 34 to become higher-temperature outside air AH. The higher-temperature outside air AH is discharged to outside of the nacelle from the nacelle exhaust port 33.
In the wind turbine generator 1 as described above, the in-nacelle air An supplied into the rotor head body 41 from the leading edge manhole 44 as the intake port forms the in-head air flow Ar that flows without forming a circulation flow within the rotor head body 41 and flows out from the nacelle-side manhole 45 as the exhaust port. At this point, the in-head air flow Ar flows through the area around the hub control board 20, so that the area around the hub control board 20 can be actively ventilated and cooled down.

As described above, in the wind turbine generator 1 according to the aforementioned embodiment, at least one leading edge manhole 44 and at least one nacelle-side manhole 45 are provided in the rotor head body 41. Accordingly, air intake and exhaust are not performed at the same time by using one manhole, but the in-head air flow Ar passing through the leading edge manhole 44 as the intake port and the nacelle-side manhole 45 as the exhaust port is formed, and the in-nacelle air An is used after passing through the pressure drop element 32 at the nacelle intake port 31. That is, in the present embodiment, the in-head air flow Ar flowing from a front end portion to a rear end portion substantially along the rotary axis CL is formed within the rotor head body 41 to actively ventilate and cool the area around the hub control board 20. The air intake and exhaust within the rotor head body 41 are separately performed by using the separate manholes. Thus, the air flow in the rotor head body 41 can be prevented from forming a circulation flow.
Although the intake ventilation fan 46 is installed at the leading edge manhole 44 of the rotor head body 41, and an exhaust louver 48 is installed at the nacelle-side manhole 45 in the embodiment shown in the drawings, a modification as described below may be also employed. The present invention is not particularly limited to a system configuration according to the embodiment shown in the drawings.

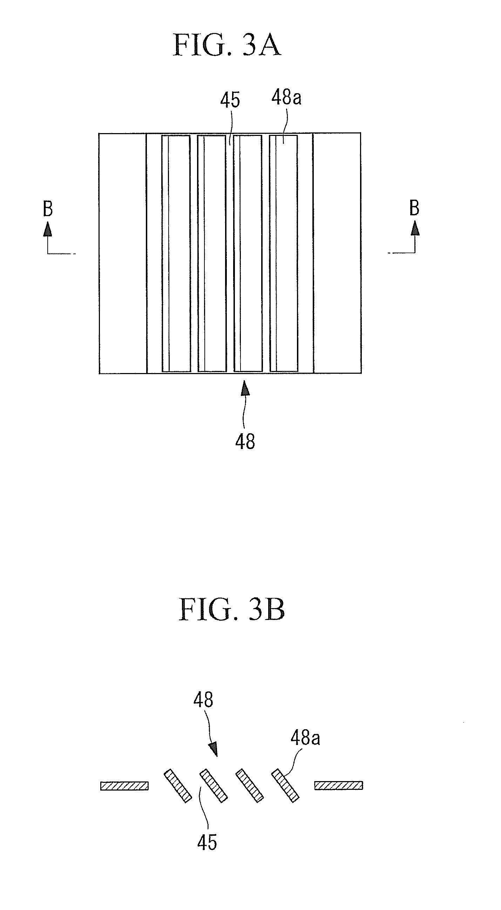

The exhaust louver 48 is formed by attaching blind-like slats 48a to the opening portion in parallel so as to allow air passage with a flow path restricted as shown in, for example, Figs. 3A and 3B. Therefore, even if foreign matter exists in a space of the nacelle 3, the foreign matter hardly enters the rotor head body 41 from the nacelle-side manhole 45 as the exhaust port. Particularly, together with such an effect that the inner portion of the rotor head body 41 has a positive pressure, the exhaust louver 48 can effectively suppress entrance of mist into the rotor head body 41.

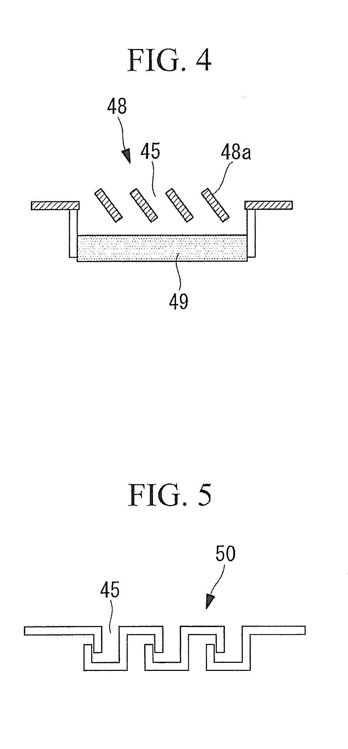

A filter 49 having functions of dust removing, salt removing and the like may be arranged at and used in combination with the exhaust louver 48 as safety measures against a case in which foreign matter is mixed into the in-nacelle air An or the like as shown in, for example, Fig. 4.
A labyrinth seal 50 may be also installed at the nacelle-side manhole 45 as the exhaust port as shown in Fig. 5. When the labyrinth seal 50 is installed, the mist included in the in-nacelle air An more hardly enters the rotor head body 41.

Particularly, in the present embodiment, the pressure drop element 32 is installed at the nacelle intake port 31 to introduce the outside air into the nacelle while removing salt and dust therefrom, and thereby supply the in-nacelle air An into the rotor head body 41. It is thus not necessary to install a pressure drop element such as a filter at the ventilation fan 46 installed at the leading edge manhole 44 of the rotor head body 41 so as to remove dust and salt. Therefore, the ventilation fan 46 can advantageously supply the in-nacelle air An into the rotor head body 41 with minimum fan power. In the configuration example shown in the drawings, a fan cover 47 may be also provided so as to improve the reliability of the mist entrance suppression effect into a space inside the rotor head body 41, or may be omitted according to an installation environment or the like of the wind turbine generator 1.
As a modification of the aforementioned embodiment, the pressure drop element may not be provided at the nacelle intake port 31, but may be provided at the intake port of the rotor head body 41.

An axial flow fan is also preferably employed as the aforementioned ventilation fan 46 so as to maintain a dynamic pressure until the vicinity of the hub control board 20 that is located close to the nacelle 3.
Also, in the aforementioned embodiment, the intake fan 46 is installed at the leading edge manhole 44 of the rotor head body 41 and the exhaust louver 48 is provided at the nacelle-side manhole 45 of the rotor head body 41 on the assumption that the oil cooler fan 34a is arranged at the upper portion of the nacelle 3 and the nacelle intake port 31 is arranged at the lower portion of the nacelle 3. However, for example, in such an arrangement as the oil cooler fan 34a is arranged at the lower portion of the nacelle 3 and the nacelle intake port 31 is arranged at the upper portion of the nacelle 3, the direction of the in-head air flow Ar formed within the rotor head body 41 may be reversed.

A duct may be also provided on at least one of the intake side and the exhaust side so as to improve intake and exhaust efficiency inside the rotor head body 41. That is, a duct that supplies the low-temperature outside air Ao from the vicinity of the nacelle intake port 31 to the intake port of the leading edge manhole 44 where the ventilation fan 46 is installed, or a duct that guides the high-temperature exhaust air Ah from the nacelle-side manhole 45 as the exhaust port to the vicinity of the nacelle 3 may be provided.

Subsequently, a first modification of the aforementioned embodiment will be described by reference to Fig. 7. The same reference numerals are assigned to the same portions as those of the aforementioned embodiment and the detailed description is omitted.
In the modification, the ventilation fan 46 is installed at the nacelle-side manhole 45, and the exhaust louver 48 is attached to the leading edge manhole 44. As a result, the in-head air flow Ar formed within the rotor head body 41 forms a reverse flow toward the tip end of the rotor head 4 from the nacelle 3 side substantially along the rotary axis CL.

By employing the configuration as described above, the ventilation fan 46 is installed at a position close to the hub control board 20, so that a smaller wind pressure than that of the first embodiment is required. Thus, a smaller fan motor capacity is required to drive the intake fan 46, and as a result, smaller electric power is consumed in operation.

Lastly, a second modification of the aforementioned embodiment will be described by reference to Fig. 8. The same reference numerals are assigned to the same portions as those of the aforementioned embodiment and the detailed description is omitted.
In the modification, an intake fan 46A and an exhaust fan 46B are respectively attached to the leading edge-side manhole 44 and the nacelle-side manhole 45 of the rotor head body 41. In this manner, the in-head air flow Ar can be more actively formed within the rotor head body 41 to improve the cooling efficiency of the hub control board 20 and the inner portion of the rotor head.
In the modification, the direction of the in-head air flow may be also reversed by reversing the installation positions of the intake fan 46A and the exhaust fan 46B depending on the structure or the like on the nacelle 3 side.

As described above, in accordance with the aforementioned present embodiment and the modifications, the intake and/or exhaust fan may be installed at at least one of the intake port and the exhaust port. That is, any of an aspect in which the intake fan or the exhaust fan is installed only at the leading edge manhole 44, an aspect in which the intake fan or the exhaust fan is installed only at the nacelle-side manhole 45, an aspect in which the intake fan is installed at the leading edge manhole 44 and the exhaust fan is installed at the nacelle-side manhole 45, and an aspect in which the exhaust fan is installed at the leading edge manhole 44 and the intake fan is installed at the nacelle-side manhole 45 may be employed.

In accordance with the aforementioned present embodiment and the modifications, the air intake and exhaust in the rotor head body 41 are performed by the separate manholes, so that the air flow in the rotor head body 41 hardly forms a circulation flow, and the ventilation inside the rotor head and the cooling of the in-head equipment can be effectively performed. That is, since a main stream of the in-head air flow Ar has a large speed component in the direction along a rotary shaft center (the rotary axis CL) of the rotor head 4, the air inside the rotor head body 41 can be actively vented by the air flow to reduce an air temperature inside the rotor head.

Since the in-head air flow Ar is formed by supplying the in-nacelle air, dust and salt have been already removed from the intake air through the ventilation fan installed at the rotor head body 41. Thus, a pressure drop element is not required at the intake port of the rotor head body 41. Accordingly, the ventilation fan 46 consumes less electric power since the fan motor capacity is decreased by an amount corresponding to a pressure drop in the pressure drop element.

Moreover, the in-head air flow corresponding to the air flow in the nacelle 3 is controlled to supply the in-nacelle air as the intake air into the rotor head body 41, and discharge the exhaust air in the rotor head body 41 from the oil cooler fan 34a. Accordingly, mixture of the low-temperature intake air and the high-temperature exhaust air can be suppressed to improve the cooling efficiency.
As a result, the electronic equipment such as the hub control board installed within the rotor head body 41 is maintained at a temperature equal to or lower than an upper-limit temperature, and thereby has a longer operating life. Also, since the air inside the nacelle 3 is used as the air supplied from the intake port of the rotor head, the pitch cylinder 13 can be protected from rust, and thereby has a longer operating life even when a pressure drop element such as a filter is not provided at the intake port of the rotor head body 41.

Therefore, in accordance with the aforementioned present embodiment, the operating lives of the electronic equipment such as the hub control board 20 installed within the rotor head body 41 of the rotor head 4 and the pitch cylinder 13 can be both extended, so that the reliability and durability of the wind turbine generator 1 are improved.
The present invention is not limited to the aforementioned embodiment, and can be changed as appropriate without departing from the scope of the invention. For example, the intake port and the exhaust port may be formed by using three or more manholes.

### Reference Signs List

- 1: Wind turbine generator
- 2: Tower
- 3: Nacelle
- 4: Rotor head
- 5: Wind turbine blade
- 10: Main bearing
- 11: Gear box
- 12: Pitch motor
- 13: Pitch cylinder
- 20: Hub control board
- 31: Nacelle intake port
- 32: Pressure drop element
- 33: Nacelle exhaust port
- 34: Oil cooler
- 34a: Oil cooler fan
- 41: Rotor head body
- 42: Head cover
- 43: Space portion
- 44: Leading edge manhole
- 45: Nacelle-side manhole
- 46: Ventilation fan
- 47: Fan cover
- 48: Exhaust louver
- 49: Filter
- 50: Labyrinth seal

## Claims

1. A wind turbine generator in which a rotor head rotating upon receiving wind power on a wind turbine blade drives a generator installed within a nacelle provided with an intake port for introducing outside air to generate electric power, the nacelle being installed on an upper end portion of a tower erected on a foundation, a head cover covering an outer periphery of a rotor head body of the rotor head, and equipment such as a control board being installed within the rotor head body,
wherein the rotor head and the nacelle communicate with each other to allow air passage therethrough, and
an intake port and an exhaust port arranged apart from each other in a rotary axis direction are provided in the rotor head body, so as to allow air supplied from the intake port to form an in-hub air flow that passes through an area around the equipment and flows out from the exhaust port.

2. The wind turbine generator according to claim 1, wherein a pressure drop element is attached to the intake port.

3. The wind turbine generator according to claim 1 or 2, wherein the intake port and the exhaust port are at least one leading edge manhole and at least one nacelle-side manhole provided in the rotor head body.

4. The wind turbine generator according to any of claims 1 to 3, wherein an intake and/or exhaust fan is installed at at least one of the intake port and the exhaust port.

5. The wind turbine generator according to claim 4, wherein air supplied from the intake port by operation of the fan is air inside the nacelle.

6. The wind turbine generator according to any of claims 1 to 5, wherein the in-head air flow has a speed component in a direction along a rotary shaft center of the rotor head.
